# EUROPÄISCHE PATENTANMELDUNG

(11) **EP 0 554 677 A1**
(43) Veröffentlichungstag der Anmeldung: **11.08.1993**
(21) Anmeldenummer: 93100436.0
(22) Anmeldetag: 14.01.1993
(51) Int. Cl.: F16B 17/00, F16B 21/18, F16B 19/02

(54) **Steckverbindung an Maschinenteilen**

(30) Priorität: 01.02.1992 DE 4202903
(71) Anmelder: ROBERT BOSCH GMBH, 70442 Stuttgart (DE)
(72) Erfinder: Fecht, Günther, W-7149 Freiberg (DE); Okrent, Elmar, Dipl.-Ing. (FH), W-7148 Aldingen (DE)

(57) **Zusammenfassung**

Es soll eine Toleranzen ausgleichende, Drehmomente übertragende Steckverbindung zwischen zwei Maschinenteilen geschaffen werden.

Eine Steckverbindung (19) ist an zwei Maschinenteilen (11 und 12) verwirklicht, welche auf einer Welle (10) passend aufgenommen sind. Das Maschinenteil (11) besitzt eine Aussparung (21), in welche ein parallel zur Welle (10) verlaufender Vorsprung (20) des Maschinenteils (12) eingreift. Auf den Vorsprung (20) ist eine Buchse (28) geführt, welche Radialabweichungen zwischen der Welle (10) dem Vorsprung (20) und der Aussparung (21) auszugleichen vermag. Auf der Buchse (28) ist ein am Innenumfang der Aussparung (21) angreifender, elastischer Ring (37) aufgenommen.

Die Steckverbindung (19) vermag Toleranzen auszugleichen, Drehmomente zu übertragen und dämpft Lastwechselmomente sowie Schwingungen der Maschinenteile (11, 12). Außerdem verringert sie den Verschleiß der Buchse (28) in der Aussparung (21).

## Beschreibung

### Stand der Technik

Die Erfindung geht aus von einer Steckverbindung an Maschinenteilen nach der Gattung des Hauptanspruchs.

Derartige Steckverbindungen werden zur Lagefixierung des einen Teils am anderen und zur Verdrehsicherung beider Teile relativ zueinander eingesetzt. Dabei machen Toleranzen und Fertigungsabweichungen Maßnahmen an beiden Teilen erforderlich, um das zwangfreie Eingreifen des Vorsprungs in die Aussparung zu ermöglichen. Hierdurch kann die Steckverbindung jedoch mit einem Spiel behaftet sein, was die Qualität des Formschlusses zwischen den beiden Maschinenteilen mindert.

### Vorteile der Erfindung

Die erfindungsgemäße Steckverbindung mit den kennzeichnenden Merkmalen des Hauptanspruchs hat demgegenüber den Vorteil, daß durch die bezüglich der Welle radiale Bewegbarkeit der Buchse auf dem Vorsprung Radialabweichungen zwischen dem Vorsprung am einen Teil und der Aussparung des anderen Teils sowie durch die Anordnung des elastischen Ringes zwischen der Buchse und der Aussparung Durchmessertoleranzen und Winkelfehlstellungen ausgeglichen werden. Unzulässige Radialkräfte zwischen den beiden Teilen werden somit vermieden. Außerdem bewirkt der elastische Ring in vorteilhafter Weise eine Dämpfung von zwischen den beiden Teilen auftretenden Schwingungen. Er dämpft Lastwechselmomente und verringert den Verschleiß zwischen der Buchse und der Aussparung.

Durch die in den Unteransprüchen aufgeführten Maßnahmen sind vorteilhafte Weiterbildungen und Verbesserungen der im Hauptanspruch angegebenen Steckverbindung möglich. Dabei dienen diese Maßnahmen der Erleichterung der Montage und zur Sicherstellung eines dauerhaften Eingriffs der beiden Maschinenteile.

### Zeichnung

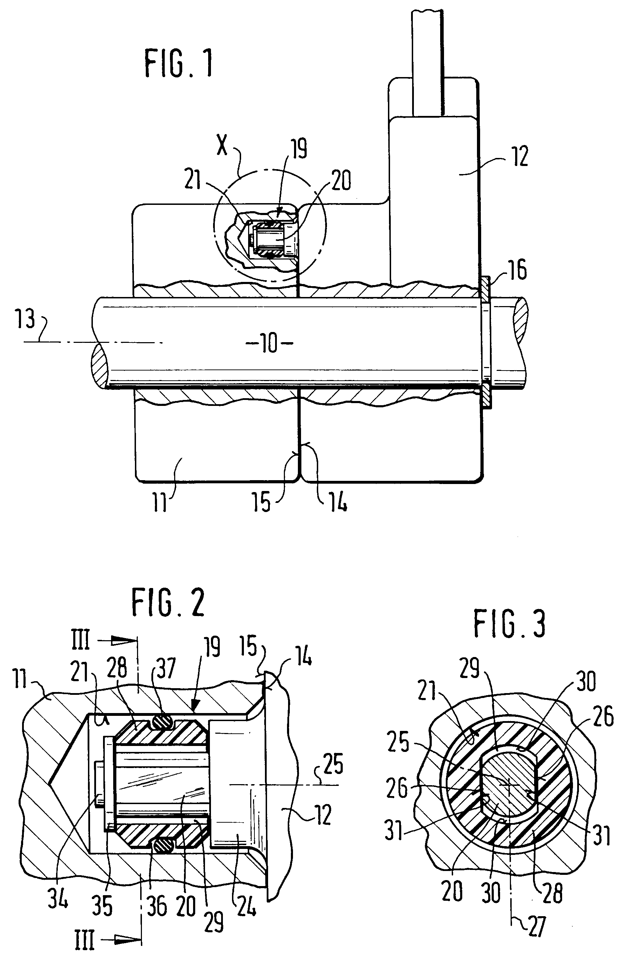

Ein Ausführungsbeispiel der Erfindung ist in der Zeichnung vereinfacht dargestellt und in der nachfolgenden Beschreibung näher erläutert. Es zeigen Figur 1 eine Ansicht von Maschinenteilen, welche eine als Verdrehsicherung dienende Steckverbindung aufweisen, Figur 2 im Längsschnitt die in Figur 1 mit X gekennzeichnete Steckverbindung als Einzelheit in von Figur 1 abweichendem Maßstab und Figur 3 einen Querschnitt entlang der Linie III-III in Figur 2 durch die Steckverbindung.

### Beschreibung des Ausführungsbeispiels

Das in Figur 1 dargestellte Ausführungsbeispiel gibt zwei auf einer gemeinsamen Welle 10 angeordnete Maschinenteile 11 und 12 wieder. Das Maschinenteil 11 ist aufgrund einer Preßverbindung drehfest mit der Welle 10 verbunden. Das Maschinenteil 12 ist, sofern es sich außer Eingriff mit dem Maschinenteil 11 befindet, drehbar mit geringem radialem Spiel auf der Welle 10 geführt. Wie in Figur 1 dargestellt, weisen die beiden Maschinenteile 11 und 12 jeweils eine rechtwinklig zur Längsachse 13 der Welle 10 verlaufende Stirnfläche 14 bzw. 15 auf, entlang der die beiden Teile aneinander abgestützt sind. Auf der von der Stirnfläche 15 abgewandten Seite ist das Maschinenteil 12 mit einem Axialsicherungselement 16, z.B. einem Sprengring, auf der Welle 10 in Anlage am Maschinenteil 11 gehalten.

Die beiden Maschinenteile 11 und 12 stehen durch eine Steckverbindung 19 miteinander in formschlüssigem Eingriff. Die in Figur 2 als Einzelheit X in Figur 1 gekennzeichnete Steckverbindung 19 ist in Figur 2 vergrößert wiedergegeben. Sie besteht im wesentlichen aus einem Vorsprung 20 am Maschinenteil 12, der in einer Aussparung 21 des anderen Maschinenteils 11 eingreift. Im einzelnen weist die Steckverbindung 19 folgenden Aufbau auf:

Auf der Seite der Stirnfläche 15 des Maschinenteils 12 ist ein Ansatz 24 angeformt, welcher in den abgesetzten Vorsprung 20 übergeht. Der Vorsprung 20 weist im wesentlichen kreiszylindrischen Querschnitt auf (Figur 3) und besitzt eine parallel zur Längsachse 13 der Welle 10 verlaufende Längsachse 25. Beiderseits dieser Längsachse 25 ist der Vorsprung 20 mit symmetrisch angeordneten, parallel verlaufenden Abflachungen 26 versehen. Diese Abflachungen 26 erstrecken sich mit gleichem Abstand parallel zu beiden Seiten einer gemeinsamen Ebene 27 von Welle 10 und Vorsprung 20. Diese Ebene 27 verläuft in Figur 2 in der Zeichenebene, in Figur 3 erstreckt sie sich dagegen rechtwinklig zur Zeichenebene. Auf dem Vorsprung 20 ist eine Buchse 28 von im wesentlichen kreiszylindrischer Form passend aufgenommen. Die Buchse 28 hat eine Durchbrechung 29, welche entsprechend dem Querschnitt des Vorsprungs 20 gegenüberliegende, kreiszylindrische Bereich 30 aufweist, zwischen denen sich parallel verlaufende Abflachungen 31 erstrecken. Die kreiszylindrischen Bereiche 30 der Durchbrechung 29 weisen einen größeren Durchmesser auf als ihn der Vorsprung 20 besitzt. Die Abflachungen 31 der Durchbrechung 29 sind dagegen mit einem Abstand versehen, welcher mit geringem Spiel größer als der Abstand zwischen den Abflachungen 26 des Vorsprunges 20 ist. Die Buchse 28 ist daher in der Ebene 27 von Welle 10 und Vorsprung 20 verschiebbar. Ausgehend von der in der Zeichnung gewählten Darstellung, in welcher eine nicht benummerte Längsachse der Buchse 28 mit der Längsachse 25 des Vorsprunges 20 zusammen fällt, kann die Buchse 28 durch Verschieben auf den Vorsprung 20 ihren Abstand zur Welle 10 verkleinern oder vergrößern, soweit dies das Spiel zwischen den kreiszylindrischen Bereichen 30 der Buchse und dem Mantel des Vorsprungs 20 zuläßt. Ebenso ist in Grenzen eine Schiefstellung der Buchse 28 auf den Vorsprung 20 möglich, d.h. der Buchse 28 kann einen spitzen Winkel zur Längsachse 25 des Vorsprunges 20 einnehmen.

Um die Buchse 28 axial auf dem Vorsprung 20 zu halten, ist an dessen freiem Ende 34 Axialsicherungselement 35 in Form eines Sprengringes aufgenommen, welches die Buchse 28 stirnseitig übergreift. Umfangsseitig besitzt die Buchse 28 eine Nut 36, in welche ein über den Mantel der Buchse vorstehender elastischer Ring 37 in Form eines O-Ringes eingelegt ist. Mit diesem Ring 37 steht der Vorsprung 20 des Maschinenteils 12 mittels der Buchse 28 im Eingriff am Innenumfang der als Bohrung kreiszylindrischen Querschnitts ausgebildeten Aussparung 21 des anderen Maschinenteils 11. Der elastische Ring 37 unterliegt dabei einer radialen Pressung. Der Ring 37 ist somit in der Lage, Durchmessertoleranzen der Aussparung 21 auszugleichen und Schwingungen des Maschinenteils 12 zu dämpfen. Außerdem dämpft der Ring 37 durch rechts- und linksdrehende Momente verursachte Lastwechselschwingungen und verringert den Verschleiß zwischen der Buchse 28 und der Aussparung 21. Die Steckverbindung 19 benötigt nur einen geringen Einbauraum und ist im gefügten Zustand der Maschinenteile 11 und 12 im Maschinenteil 11 gelegen. Dabei sind der Ansatz 24, der Vorsprung 20, das Axialsicherungselement 35, die Buchse 28 und der elastische Ring 37 völlig in der Aussparung 21 aufgenommen. Neben dem Ausgleich von Radialabweichungen zwischen der Welle 10 auf der einen Seite und dem Vorsprung 20 sowie der Aussparung 21 auf der anderen Seite ist die Steckverbindung 19 bestimmt, Drehmomente zwischen dem Maschinenteil 11 und dem Maschinenteil 12 aufzunehmen bzw. zu übertragen. Die Steckverbindung 19 wirkt daher auch als Verdrehsicherung des Maschinenteils 12 relativ zum Maschinenteil 11.

## Patentansprüche

1. Steckverbindung (19) an Maschinenteilen (11, 12) mit einem Vorsprung (20) an einem Teil (12), der in eine Aussparung (21) des anderen Teils (11) eingreift,
gekennzeichnet durch die folgenden Merkmale:
- beide Teile (11, 12) sind auf einer gemeinsamen Welle (10) passend aufgenommen,
- der Vorsprung (20) am einen Teil (12) verläuft parallel zur Welle (10) und besitzt im wesentlichen kreiszylindrischen Querschnitt, der beiderseits einer gemeinsamen Ebene (27) von Welle (10) und Vorsprung (20) symmetrisch angeordnete, parallel verlaufende Abflachungen (26) aufweist,
- auf dem Vorsprung (20) ist eine Buchse (28) passend aufgenommen mit einer dem Querschnitt des Vorsprungs (24) entsprechenden, jedoch durchmessergrößeren Durchbrechung (29),
- die Buchse (28) weist umfangsseitig eine Nut (36) auf, in welche ein über den Mantel der Buchse (28) vorstehender elastischer Ring (37) eingelegt ist,
- der Ring (37) greift mit Vorspannung am Innenumfang der als Bohrung kreiszylindrischen Querschnitts ausgebildeten Aussparung (21) des anderen Teils (11) ein.

2. Steckverbindung nach Anspruch 1, dadurch gekennzeichnet, daß die Buchse (28) stirnseitig von einem am freien Ende (34) des Vorsprungs (20) aufgenommenen Axialsicherungselement (35) übergriffen ist.

3. Steckverbindung nach Anspruch 1, dadurch gekennzeichnet, daß das andere Teil (11) drehfest mit der Welle (10) verbunden ist, während das eine Teil (12) relativ zur Welle (10) verdrehbar und auf der zum anderen Teil (11) abgewandten Seite mit einem Axialsicherungselement (16) gehalten ist.
